# EUROPÄISCHE PATENTSCHRIFT

(11) **EP 1 152 873 B1**
(45) Veröffentlichungstag und Bekanntmachung des Hinweises auf die Patenterteilung: **04.09.2002**
(21) Anmeldenummer: 00916747.9
(22) Anmeldetag: 15.02.2000
(51) Int. Cl.: B26D 7/30

(54) **VERFAHREN UND VORRICHTUNG ZUM ABTRENNEN SCHEIBENFÖRMIGER KÖRPER VON EINEM URSPRUNGSKÖRPER**
METHOD AND DEVICE FOR SEPARATING DISC-SHAPED BODIES FROM AN ORIGINAL BODY
PROCEDE ET SYSTEME POUR SEPARER DES CORPS SOUS FORME DE DISQUES D'UN CORPS D'ORIGINE

(30) Priorität: 16.02.1999 DE 19906021
(43) Veröffentlichungstag der Anmeldung: 14.11.2001
(73) Patentinhaber: Thiedig, Ullrich, Dipl.-Ing., D-38118 Braunschweig (DE); Wente, Holger, Dipl.-Ing., D-38108 Braunschweig (DE); KÖSTER, Bernd, Dr., 38162 Cremlingen (DE)
(72) Erfinder: Thiedig, Ullrich, Dipl.-Ing., D-38118 Braunschweig (DE); Wente, Holger, Dipl.-Ing., D-38108 Braunschweig (DE); KÖSTER, Bernd, Dr., 38162 Cremlingen (DE)
(74) Vertreter: Gerstein, Hans Joachim, Dipl.-Ing.
(86) Internationale Anmeldenummer: DE0000428
(87) Internationale Veröffentlichungsnummer: WO00048800

(56) Entgegenhaltungen:
- EP-A- 0 243 568
- DE-A- 19 604 254
- FR-A- 2 627 423

## Beschreibung

Die Erfindung betrifft ein Verfahren und eine Vorrichtung zum Abtrennen scheibenförmiger Körper von einem Ursprungskörper, wobei die Umgebung der Stirnfläche des Ursprungskörpers ausgeleuchtet wird, die jeweilige Stirnfläche des Ursprungskörpers mit einer Erkennungseinrichtung optisch mit Hilfe des Kontrastes zwischen der Umgebung der Stirnfläche und der Stirnfläche erkannt wird, die für ein vorgegebenes Scheibengewicht erforderliche Scheibendicke aus der spezifischen Masse des Ursprungskörpers und der Stirnfläche ermittelt wird und das Abtrennen des scheibenförmigen Körpers mit dem so ermittelten Wert gesteuert wird.

Viele Lebensmittel wie Käse, Schinken, Wurst etc. kommen in aufgeschnittener Form fertig verpackt in den Handel, wobei ein relativ großer Anteil als sogenannte egalisierte Ware mit einem Festgewicht ausgeliefert wird. Beim Aufschneiden der Produkte muß das Festgewicht gemäß der Toleranzvorgaben der Fertigverpackungsordnung möglichst genau eingehalten werden. Dies gelingt um so schlechter, je stärker die Schwankungen im Produktquerschnitt innerhalb eines Produktstranges, aber auch von einem Produktstrang zum nächsten sind. Deswegen werden Verfahren zur rechtzeitigen Erfassung des Produktquerschnittes eingesetzt, die eine Anpassung des Produktvorschubs in dem Moment erlauben, wenn auch die Änderung im Querschnitt erfolgt.

In der DE-PS 28 20 583 C2 und in der EP 246 668 A2 ist ein Verfahren beschrieben, bei dem das Gewicht der bereits abgeschnittenen Scheiben mit einer Waage ermittelt und der Vorschub entsprechend dem ermittelten Gesamtgewicht eingestellt wird. Dieses Verfahren ist umständlich und langwierig, da jede Waage eine gewisse Zeit zur Erreichung ihrer Gleichgewichtslage benötigt. Ein schnelles Wiegen scheitert somit an physikalischen Gesetzmäßigkeiten wie z.B. Eigenschwingvorgänge, schlechte Filterung von Störungen etc. und dem unvermeidlichen Zeitversatz zwischen Wiege- und Schneidvorgang.

Es sind weiterhin, z.B. aus der US-PS 4,557,019, Verfahren bekannt, die auf einem Scannen der Oberfläche der Produkte vor dem Schneidvorgang beruhen. Hierbei wird z.B. mit einem Triangulationsverfahren die Außenhülle des aufzuschneidenden Ursprungskörpers vor dem Schneidvorgang abgetastet und der Vorschub später während des Schneidvorgangs entsprechend dem vorher errechneten Volumen bzw. den ermittelten Querschnitten angepaßt. Wegen der Unförmigkeit der Produkte geht jedoch beim Transport zum Schneidschacht und bei dem Aufnehmen der Produkte durch eine Greiferklaue, insbesondere wegen der damit verbundenen Stauchbewegung, die exakte Positionierung verloren. Somit ist der tatsächliche Querschnitt gegenüber dem errechneten verschoben. Durch die begrenzte Anzahl von Bildaufnehmern treten je nach tatsächlicher Form der Produkte Schattenbereiche auf, in denen die Oberfläche nicht korrekt erfaßt wird. Zudem führen Hohllagen und starke Verformungen in der Regel zu Volumenüberschätzungen. Obwohl die Ausleuchtung und Verschmutzung der Abtasteinrichtung bei diesem Verfahren relativ unproblematisch ist, wird die tatsächliche Querschnittsfläche nicht mit ausreichender Genauigkeit bestimmt.

In der DE-OS 38 08 790 A1 ist ein Verfahren zur Erfassung der Schnittflächen während des Schneidvorgangs beschrieben, bei dem die Schnittfläche mit Beleuchtungskörpern angestrahlt wird und diese unter Ausnutzung des Reflektionsverhaltens mit einer CCD-Kamera erfaßt wird. Sowohl die Kamera als auch die Beleuchtungskörper sind frontal vor der Schnittfläche angeordnet. Das Verfahren stößt an seine Grenzen, wenn die Fallhöhe aus schneidtechnischen Gründen nicht ausreichend groß gewählt werden kann, wie z.B. bei Portionen, die aufgrund ihrer beim Schneiden zunehmenden Höhe oder spezieller Schindeltechniken sehr dicht vor die Schneidfläche kommen. Zudem treten Probleme bei Schneideinrichtungen auf, die mit sehr hohen Schneidleistungen von bis zu 2.000 Schnitten pro Minute arbeiten. Bei diesen hohen Geschwindigkeiten fällt die bereits abgeschnittene Scheibe noch, während bereits das Bild für die folgende, noch vor dem Schnitt befindliche Scheibe, aufgenommen wird. Die Aufnahme und der Beleuchtungswinkel müssen dadurch zwangsweise sehr flach sein und es wird nahezu unmöglich, eine Ausleuchtung ohne störenden Schattenwurf oder unkontrollierte Rückreflektion zu bewerkstelligen. Zudem müssen die Kamera und die Beleuchtung in Bereichen mit extrem starker Verschmutzung angeordnet werden.

Die vorstehend genannten Nachteile konnten mit der in der DE-PS 37 14 199 C2 beschriebenen Schnittvorrichtung verringert werden, indem die Beleuchtungselemente direkt hinter die Schneidebene neben das Trennmesser angeordnet wurden. Durch die direkte Schnittflächenbestimmung kann die tatsächliche Querschnittsfläche sehr exakt erfaßt werden. Bei der beschriebenen Vorrichtung tritt jedoch das Problem auf, daß die Bildqualität durch Reflektionen und Schattenbildung bei unterschiedlichen Ursprungskörpern und aufgrund von Schattenbildung durch Zusatzelemente der Schneidvorrichtung, wie z.B. Haltearme, auftreten.

In dem US-Patent 5,129,298 ist eine Schneidevorrichtung beschrieben, bei der die Kontur eines Ursprungskörpers mit einer Dunkelfeldbeleuchtung ausgeleuchtet wird. Hierzu sind hinter dem Ursprungskörper drei Beleuchtungselemente zum Beleuchten einer Mattscheibe angeordnet, um Lichtstrahlen schräg von oben in Längsrichtung des Ursprungskörpers auf die obere Schnittkante und schräg von der Seite auf die Seitenkanten zu leiten. Durch Reflektionen und Schattenbildung kann die Qualität der Ausleuchtung jedoch beeinträchtigt werden. Zudem können Hohllagen und Einbuchtungen an der Produktunterseite nicht erkannt werden.

Aufgabe der Erfindung war es daher, ein Verfahren und eine Vorrichtung zum Abtrennen scheibenförmiger Körper von einem Ursprungskörper anzugeben, bei dem die vorstehend genannten Probleme vermieden werden.

Bei dem Verfahren sollte die Umgebung der Stirnfläche des Ursprungskörpers ausgeleuchtet werden, die jeweilige Stirnfläche des Ursprungskörpers mit einer Erkennungseinrichtung optisch mit Hilfe des Kontrastes zwischen der Umgebung der Stirnfläche und der Stirnfläche erkannt werden, die für ein vorgegebenes Scheibengewicht erforderliche Scheibendicke aus der spezifischen Masse des Ursprungskörpers und der Stirnfläche ermittelt werden, und das Abtrennen des scheibenförmigen Körpers mit dem so ermittelten Wert gesteuert werden.

Die Vorrichtung sollte eine Trenneinrichtung, eine Vorschubeinrichtung zum Vorschieben des Ursprungskörpers zur Trenneinrichtung, eine optische Erkennungseinrichtung zur Bestimmung der Stirnflächenkontur des Ursprungskörpers und Beleuchtungskörper zum Ausleuchten der Umgebung der Trennfläche aufweisen, wobei die Erkennungseinrichtung die Stirnfläche mit Hilfe des Kontrastes zwischen der Umgebung der Stirnfläche und dem Ursprungskörper bestimmt und der Vorschub des Ursprungskörpers in Abhängigkeit von der ermittelten Stirnfläche erfolgt.

Die Aufgabe wird durch das Verfahren gemäß Patentanspruch 1 dadurch gelöst, daß der Ursprungskörper in einem Tunnel geführt wird und der Ursprungskörper mit einer Vielzahl von Beleuchtungskörpern ausgeleuchtet wird, die flächig entlang der Längsrichtung des Ursprungskörpers in dem Tunnel angeordnet sind.

Entsprechend hat die Vorrichtung gemäß den kennzeichnenden Merkmalen des Patentanspruchs 6 eine Vielzahl von Beleuchtungskörpern, die entlang der Längsrichtung des Ursprungskörpers angeordnet. Dadurch wird eine gleichmäßige und kontraststarke Ausleuchtung der Umgebung der Stirnfläche gewährleistet.

Es wurde erkannt, daß störende Reflektionen und Schattenbildung durch flächige Anordnung von Beleuchtungskörpern in einem Tunnel wesentlich vermindert werden können.

Unter anderem aus der DE-PS 42 06 196 C2 ist die Verwendung eines Vorschubstunnels in Verbindung mit Schneidmaschinen bekannt. Herkömmliche Vorschubtunnel werden jedoch nur aus Sicherheitsgründen und zur besseren Führung des Ursprungskörpers verwendet.

Es wurde erkannt, dass sich ein Tunnel auch vorteilhaft zur verbesserten Ausleuchtung der Schnittkanten des Ursprungskörpers eignet, wenn eine Vielzahl von Beleuchtungselementen in dem Tunnel angeordnet sind.

Dadurch, daß die Beleuchtungskörper einen Tunnel bilden, der in ausreichender Entfernung vor der Trenneinrichtung bzw. Schneidebene beginnt und an der Trenneinrichtung endet, wird der Ursprungskörper rundherum gleichmäßig ausgeleuchtet. Schattenbildung kann verringert und der Kontrast erhöht werden, indem die Beleuchtungskörper in einem Tunnel aus reflektierenden Material eingebaut sind. Der Tunnel hat vorteilhafterweise bis zu vier verschiedene Bereiche, die unterschiedliche Strahlungen liefern. In einem ersten Bereich tritt eine diffuse Strahlung mit einer zur Schnittebene hin verringerten Intensität auf. Der erste Bereich besteht aus der Frontfläche des Tunnels neben der Schnittfläche, aus dem mittleren Bereich des Tunneldeckels, aus dem vorderen und mittleren Teil der Seitenwände und aus dem Tunnelboden.

Vorteilhafterweise sind die Beleuchtungskörper einzeln einstellbar, indem z.B. die Strahlungsrichtung der Beleuchtungskörper einzeln ausrichtbar sind, indem diese z.B. motorisch bewegbar sind. Vorteilhafterweise wird die Einstellung der Beleuchtungskörper mit einer entsprechenden Steuerung vorgenommen, die einen Speicher zur Abspeicherung von Einstellungen für die Beleuchtungskörper aufweist. Hierdurch können die Einstellungen für verschiedene Umgebungsbedingungen einmalig justiert und jeder Zeit wieder ohne großen Aufwand aufgerufen und die Beleuchtungskörper entsprechend an die definierten Umgebungsbedingungen angepaßt eingestellt werden.

Indem die Beleuchtungskörper gepulst und die Erkennungseinrichtung entsprechend getriggert angesteuert werden, wird eine produktschädigende Wärmeentwicklung vermieden und die Aufnahmeschärfe und der Störabstand gegen Umgebungslicht vorteilhaft erhöht.

Vorteilhafterweise werden die Beleuchtungskörper im Betrieb nachjustiert, indem die Steuerung Reflektionssignale und Kontrastinformationen der Erkennungseinrichtung auswertet und die Beleuchtungskörper so justiert, daß die Reflektionen minimiert und der Kontrast erhöht wird.

In einem zweiten Bereich wird eine nach hinten von der Schnittebene weg gerichtete Strahlung geliefert. Dieser zweite Bereich ist aus dem Vorderteil des Tunneldeckels neben der Schnittebene gebildet und dient insbesondere zur Ausleuchtung von Zusatzelementen, wie z.B. Produktniederhalter. In einem dritten Bereich wird eine schräg nach vorne zur Schnittebene hin gerichtete Strahlung geliefert, so daß die Schnittkante ausgeleuchtet und der Kontrast erhöht wird. Der dritte Bereich ist aus dem hinteren Teil des Tunneldeckels gebildet.

In einem vierten Bereich tritt eine gerade auf den Ursprungskörper gerichtete Strahlung auf. Dieser vierte Bereich wird mindestens aus dem mittleren Bereich der freiliegenden Seitenwand gebildet. Dieser Bereich dient der Ausleuchtung der Seitenfläche des Ursprungskörpers.

Es ist besonders vorteilhaft, wenn mindestens die Seitenwand, an der der Ursprungskörper anliegt, verschieblich ist. Dann kann die Stirnfläche optimal ausgerichtet und erfaßt werden. Durch die Verschiebung der Seitenwände können die Beleuchtungsverhältnisse auch optimiert werden.

Die Erfindung wird nachfolgend anhand der beigefügten Zeichnungen näher erläutert. Es zeigen:
- Figur 1 -: eine schematische Vorrichtung zum Abtrennen scheibenförmiger Körper im Schnitt längs zur Transportrichtung;
- Figur 2 -: eine Frontansicht der Vorrichtung;
- Figur 3 -: eine perspektivische Ansicht des Beleuchtungsrahmens für die Vorrichtung;
- Figur 4 -: eine Längsschnittansicht des Beleuchtungsrahmens.

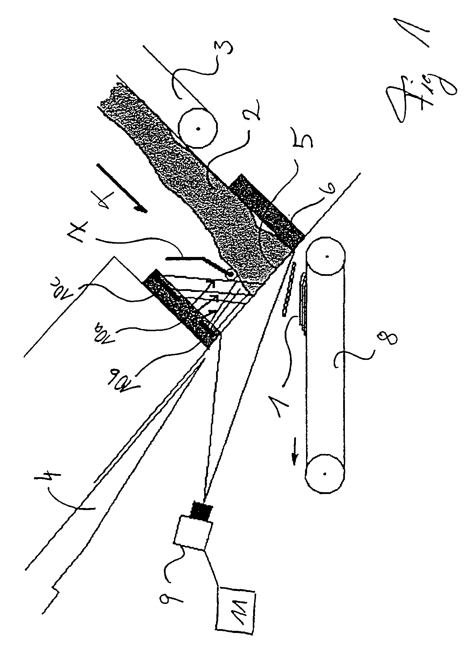

Die Figur 1 läßt eine schematische Ansicht der Vorrichtung zum Abtrennen scheibenförmiger Körper 1 von einem Ursprungskörper 2 erkennen, bei dem der Ursprungskörper 2 auf einer Vorschubeinrichtung 3 gelagert und von dieser einer Trenneinrichtung 4 zugeführt wird. Die Trenneinrichtung 4 ist in dem dargestellten Ausführungsbeispiel ein exentrisch rotierendes kreisförmiges Messer. In der Nähe der Schnittfläche 5 wird der Ursprungskörper 2 von einem Beleuchtungsrahmen 6 getragen. Die Oberseite des Ursprungskörpers 2 wird von einem Niederhalter 7 geführt, der in Transportrichtung T geneigt ist. Der Beleuchtungsrahmen 6 und die Vorschubeinrichtung 3 sind geneigt, so daß die Transportrichtung T etwa einen Winkel von 45° in Bezug auf die Horizontale bildet. Die scheibenförmigen Körper 1 fallen dann aufgrund der Schwerkraft nach unten und werden mit einem Abzugsband 8 von der Trenneinrichtung 4 wegtransportiert. Das Abzugsband 8 ist ein horizontales Förderband. Die Schnittfläche 5 des Ursprungskörpers 2 wird von einer Kamera 9 erfaßt, die rechts vor der Schnittfläche und in einem relativ flachen Winkel hierzu angeordnet ist. Der Aufnahmewinkel muß vor allem bei sehr hohen Schneidleistungen relativ flach sein, damit bereits während des Fallens einer bereits abgeschnittenen Scheibe die folgende noch vor dem Schnitt befindliche Scheibe aufgenommen werden kann. In dem Beleuchtungsrahmen 6 sind Beleuchtungselemente 10a, 10b, 10c angebracht, die nach unten in Richtung der Schnittkante des Ursprungskörpers 2 strahlen.

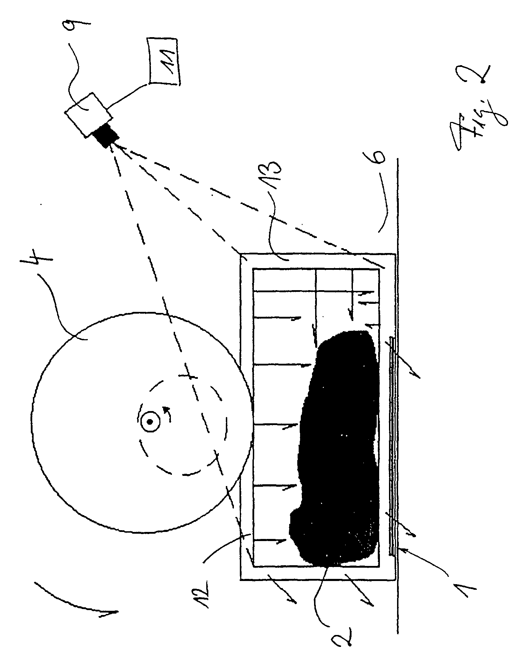

Die Figur 2 läßt die Vorrichtung in der Frontansicht erkennen. Der Ursprungskörper 2, z.B. Wurst, Schinken, Käse etc., ist in dem Beleuchtungsrahmen 6 gelagert und wird durch die Beleuchtungselemente 10a, 10b, 10c angestrahlt, die in dem Beleuchtungsrahmen 6 eingebaut sind. Die Trenneinrichtung 4 ist in diesem Ausführungsbeispiel ein kreisförmiges Messer, das um seine Achse rotiert, wobei die Achse exentrisch rotierend gelagert ist. Hierdurch werden scheibenförmige Körper 1 zyklisch aufeinanderfolgend von dem Ursprungskörper 2 getrennt. Die Kamera 9 ist in einem flachen Winkel rechts vor der Schnittfläche 5 und dem Beleuchtungsrahmen 6 angeordnet und erfaßt die gesamte Öffnung des Beleuchtungsrahmens 6. Es ist erkennbar, daß der Beleuchtungsrahmen 6 einen Tunnel bildet, durch den während des Schneidvorgangs hindurch läuft. Dieser Tunnel beginnt, wie in der Figur 1 erkennbar ist, in ausreichender Entfernung vor der Schneidebene und endet an der Schneidebene. Die Kamera 9 erfaßt sowohl die Schnittfläche 5 als auch den vorderen Bereich des Beleuchtungsrahmens 6 direkt. Eine an die Kamera 9 angeschlossene Erkennungseinrichtung 11 wertet die Konturen zwischen der Schnittfläche 5 und der Öffnung des Beleuchtungsrahmens 6 aus und bestimmt die jeweilige Stirnfläche des Ursprungskörpers 2. Aus der zuvor festgestellten spezifischen Masse des Ursprungskörpers 2 und der ermittelten Stirnfläche wird dann die für ein vorgegebenes Scheibengewicht erforderliche Scheibendicke berechnet. Die Vorschubeinrichtung 3 wird von der Erkennungseinrichtung 11 so gesteuert, daß bei dem nachfolgenden Schnitt die entsprechende Scheibendicke von dem Ursprungskörper 2 abgetrennt wird.

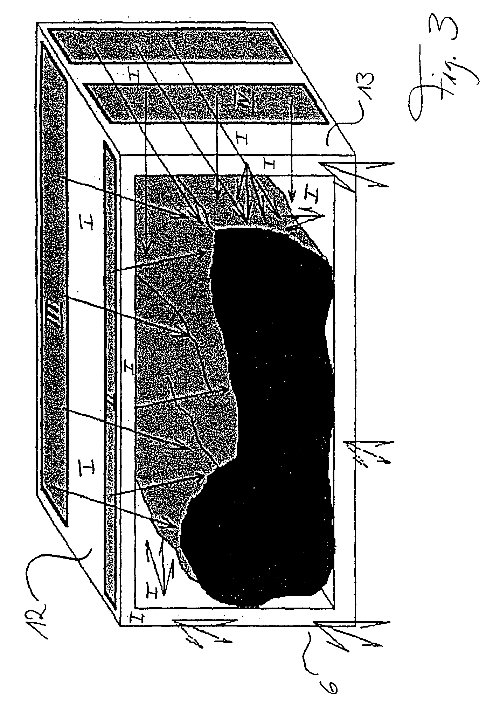

Die Erfassung der Schnittfläche erfolgt bei dem beschriebenen Bildaufnahmeverfahren als Dunkelfeld, d.h. die Umgebung der Schnittfläche 5 ist hell ausgeleuchtet und die Schnittfläche 5 erscheint dunkel. Hierfür ist, wie die Figur 3 erkennen läßt, der Beleuchtungsrahmen 6 in mehrere Bereiche I, II, III, IV eingeteilt, in denen die einstellbaren Beleuchtungselemente 10 eingebaut sind. Die Beleuchtungselemente 10 sind in den einzelnen Bereichen unterschiedlich eingestellt. Die direkt von der Kamera erfaßten Teile des Beleuchtungsrahmens 6 bilden den Hintergrund für die Produktkontur und müssen diffus und schwach leuchten. Daher sind die Beleuchtungskörper 10 so ausgerichtet, daß der Bereich I eine diffuse Strahlung aufweist, d.h. daß die Strahlungsintensität zur Schneidebene verringert ist, wobei der Rand auch strahlt. Der Bereich I besteht aus der Vorderkante des Beleuchtungsrahmens 6, einem Querstreifen in der Mitte des Deckels 12 und der freien Seitenwand 13 des Beleuchtungsrahmens 6, der vorderen Seitenkante und der Seitenwand, an der der Ursprungskörper 2 anliegt.

In dem Bereich II ist ein gerichtetes Feld nach hinten vorgesehen, um vorhandene Einbauteile, wie z.B. den Niederhalter 7, anzustrahlen, damit diese keinen störenden Schatten auf der angestrahlten Oberfläche des Ursprungskörpers 2 hervorrufen. Die Einbauteile können auch mit daran angebauten Zusatzbeleuchtungselementen versehen sein. Durch den Bereich II wird auch die Oberfläche des Ursprungskörpers 2 ausgeleuchtet, um Schattenbildung, z.B. durch Welligkeit der Produktoberfläche, zu vermeiden. Der Bereich II befindet sich im vorderen Bereich des Deckels 12 des Beleuchtungsrahmens 6.

Im hinteren Bereich des Deckels 12 entgegen der Transportrichtung T gesehen ist ein Bereich III vorgesehen, der eine gerichtete Strahlung nach vorne in Richtung der Kante des Ursprungskörpers 2 liefert. Die Strahlungsrichtung ist schräg, damit die Durchstrahlung durch den Ursprungskörper 2 möglichst gering ist. Durch die direkte Anstrahlung der Kante wird die Kontur des Ursprungskörpers 2 betont.

In der freiliegenden Seitenwand 13 des Beleuchtungsrahmens 6 ist in dessen Mitte ein Bereich IV vorgesehen, der eine gerade auf den Ursprungskörper 2 gerichtete Strahlung liefert. Die andere Seitenwand, an der der Ursprungskörper 2 anliegt, kann verschieblich sein.

Die in den Bereichen I bis IV eingebauten Beleuchtungskörper sind von Hand oder automatisch einstellbar, so daß die Beleuchtungsbedingungen an die Ursprungskörper 2 und bestimmte Konstruktionsbedingungen, wie z.B. zusätzliche Einbauelemente und besondere Niederhalter 7 für das Produkt angepaßt werden können. Hierzu kann eine nicht dargestellte Steuerung vorgesehen sein, die einen Speicher aufweist, in der für verschiedene Umgebungsbedingungen festgelegte Einstellungen der Beleuchtungskörper 10 abgelegt sind. Die Steuerung ist weiterhin so ausgestaltet, daß die einzelnen Beleuchtungskörper 10 nicht nur zur Grundeinstellung, sondern auch während des Schneidvorganges an Veränderungen angepaßt werden können. Hierzu ist die Steuerung über eine Schnittstelle mit der Erkennungseinrichtung und mit Aktoren der Beleuchtungskörper 10 verbunden, wobei die Erkennungseinrichtung störende Reflektionen und Kontrastunschärfen erkennt und entsprechende Informationen an die Steuerung zur Nachregelung der Beleuchtungskörper 10 liefert.

Die Erkennungseinrichtung 11 sollte eine von der Pixelposition des erkannten Bildes abhängige Korrektur der Fläche bzw. deren Flächenberandung vornehmen können, um die Verzerrungen durch den Blickwinkel und die Verzerrungen der Optik der Kamera 9 auszugleichen. Dann ist eine korrekte Bestimmung der Querschnittsfläche möglich. Diese Entzerrung sollte vorzugsweise durch eine entsprechende Hardware durchgeführt werden, so daß bei jedem Schnitt sofort eine Bildauswertung und eine Anpassung des Vorschubes erfolgen kann.

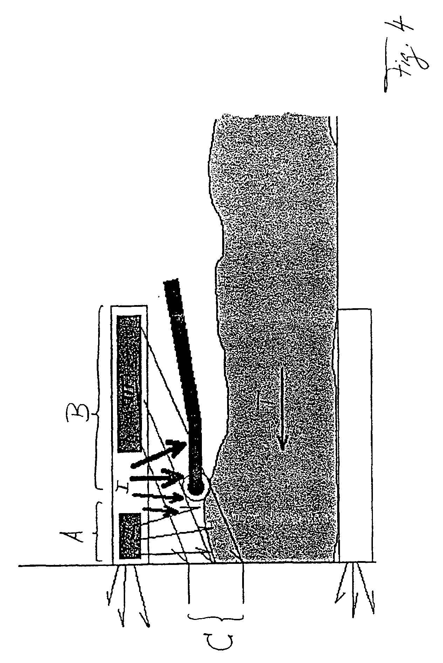

Die Figur 4 läßt den Beleuchtungsrahmen 6 im Längsschnitt erkennen. Aus dem Strahlenverlauf, die in den verschiedenen Bereichen I, II und III unterschiedlich sind, ist erkennbar, daß der Ursprungskörper 2 entlang seiner Längsrichtung flächig angestrahlt wird, wobei verschiedene Helligkeiten und Strahlungsrichtungen vorgesehen sind. Ein erster Abschnitt A erstreckt sich von der Schnittfläche 5 in Längsrichtung des Ursprungskörpers 2 entgegen der Transportrichtung T. Dieser Abschnitt A hat eine geringe Strahlungsintensität, die insbesondere dadurch bewirkt wird, daß das Licht in dem Bereich II nach hinten gerichtet ist und die Beleuchtungskörper 10 in dem Abschnitt A eine diffuse Strahlung mit geringer Intensität abgeben. Der entgegen der Transportrichtung T gesehen hinter dem Abschnitt A liegende Abschnitt B weist eine hohe Strahlungsintensität auf. Hierfür werden die Beleuchtungskörper 10 in dem Bereich I so gesteuert, daß sie sehr helles Licht abgeben. Ein dritter Abschnitt C im Bereich der Kante der Schnittfläche 5 wird ebenfalls mit einer hohen Intensität bestrahlt, indem die Beleuchtungskörper 10 in dem Bereich III entsprechend angesteuert werden.

Es ist besonders vorteilhaft, wenn die einzelnen Beleuchtungskörper 10 gepulst angesteuert werden, damit eine vernachlässigbare Wärmeentwicklung auftritt. Die Kamera 9 und die Erkennungseinrichtung 11 werden hierzu sinnvollerweise entsprechend getriggert bzw. geshuttert betrieben, so daß eine gute Aufnahmeschärfe und ein hoher Störabstand gegen Umgebungslicht gewährleistet wird. Weiterhin kann eine geeignete Zusatzbeieuchtung vor die Stirnfläche 5 angeordnet werden, wodurch das Dunkelfeld z.B. zur Unterscheidung von Fett- und Muskelfleisch differenziert ausgewertet werden kann oder eine z.B. bei Käse vorhandene Lochung erfaßt werden und in die Gewichtsberechnung mit einbezogen werden kann.

Die Steuerung der Strahlungsintensität der Beleuchtungskörper 10 kann auch dadurch erfolgen, daß auf der Innenfläche des Beleuchtungsrahmens 6 ein lichtdurchlässiges Element vorgesehen wird, bei dem die Lichtdurchlässigkeit steuerbar ist. Das Element kann z.B. in der Art einer LCD-Anzeige mit einer Steuermatrix ausgeführt sein, wobei einzelne Bereiche des Elementes unterschiedlich ansteuerbar sind. Es können aber auch eine Vielzahl von Elementen vorgesehen werden, die jede für sich mit einer bestimmten Lichtdurchlässigkeit für das gesamte Element eingestellt werden.

## Patentansprüche

1. Verfahren zum Abtrennen scheibenförmiger Körper (1) von einem Ursprungskörper (2), wobei
- die Umgebung der Stirnfläche (5) des Ursprungskörpers (2) ausgeleuchtet wird,
- die jeweilige Stirnfläche (5) des Ursprungskörpers (2) mit einer Erkennungseinrichtung (11) optisch mit Hilfe des Kontrastes zwischen der Umgebung der Stirnfläche (5) und der Stirnfläche (5) erkannt wird,
- die für ein vorgegebenes Scheibengewicht erforderliche Scheibendicke aus der spezifischen Masse des Ursprungskörpers (2) und der Stirnfläche (5) ermittelt wird,
- das Abtrennen des scheibenförmigen Körpers (1) mit dem so ermittelten Wert gesteuert wird,
**dadurch gekennzeichnet, daß**
- der Ursprungskörper (2) in einem Tunnel geführt wird und
- der Ursprungskörper (2) mit einer Vielzahl von Beleuchtungskörpern (10) ausgeleuchtet wird, die flächig entlang der Längsrichtung des Ursprungskörpers (2) in dem Tunnel angeordnet sind.

2. Verfahren nach Anspruch 1, **gekennzeichnet durch** gepulstes Ansteuern der Beleuchtungskörper (10) und getriggertes Aufnehmen der jeweiligen Stirnfläche (5) **durch** die Erkennungseinrichtung (11).

3. Verfahren nach Anspruch 1 oder 2, **dadurch gekennzeichnet, daß** die Beleuchtungskörper (10) individuell automatisch eingestellt werden, mit den Schritten:
- Abspeichern der Einstellungsparameter für die Beleuchtungskörper (10) für bestimmte Umgebungsbedingungen,
- Auslesen der Einstellungsparameter in Abhängigkeit von der jeweiligen Umgebungsbedingung,
- Einstellen der Beleuchtungskörper (10) in Abhängigkeit von den ausgelesenen Einstellungsparametern und den jeweiligen Umgebungsbedingungen.

4. Verfahren nach Anspruch 3, **dadurch gekennzeichnet, daß** die Justierung der Beleuchtungskörper (10) zur Beseitigung von Reflektionen und Erhöhung des Konstrastes von der Erkennungseinrichtung (11) gesteuert wird.

5. Verfahren nach einem der vorhergehenden Ansprüche, **dadurch gekennzeichnet, daß** die Stirnfläche (5) zusätzlich beleuchtet wird und die Erkennungseinrichtung (11) Oberflächenstrukturen der Stirnfläche (5) auswertet und die für ein vorgegebenes Scheibengewicht erforderliche Scheibendicke auch in Abhängigkeit von der Oberflächenstruktur der Stirnfläche (5) ermittelt wird.

6. Vorrichtung zum Abtrennen scheibenförmiger Körper (1) von einem Ursprungskörper (2) mit einer Trenneinrichtung (4), einer Vorschubeinrichtung (3) zum Vorschieben des Ursprungskörpers (2) zur Trenneinrichtung (4), einer optischen Erkennungseinrichtung (9, 11) zur Bestimmung der Stirnflächenkontur des Ursprungskörpers (2) und mit Beleuchtungskörpern (10) zum Ausleuchten der Umgebung der Stirnfläche (5), wobei die Erkennungseinrichtung (9, 11) die Stirnfläche (5) mit Hilfe des Kontrastes zwischen der Umgebung der Stirnfläche (5) und der Stirnfläche (5) bestimmt und der Vorschub des Ursprungskörpers (2) in Abhängigkeit von der ermittelten Stirnfläche (5) erfolgt, **dadurch gekennzeichnet, daß** der Ursprungskörper (2) in einem Tunnel geführt wird, der an der Trennseite (4) endet, die Beleuchtungskörper (10) in dem Tunnel eingebaut sind sind und die Beleuchtungskörper (10) flächig entlang der Längsrichtung des Ursprungskörpers (2) angeordnet sind.

7. Vorrichtung nach Anspruch 6, **dadurch gekennzeichnet, daß** die Beleuchtungskörper (10) einzeln einstellbar sind.

8. Vorrichtung nach Anspruch 7, **dadurch gekennzeichnet, daß** die Strahlungsrichtung der Beleuchtungskörper (10) einzeln ausrichtbar ist.

9. Vorrichtung nach Anspruch 7 oder 8, **dadurch gekennzeichnet, daß** die Beleuchtungskörper (10) motorisch bewegbar sind und eine Steuerung zur Einstellung der Beleuchtungskörper (10) vorgesehen ist.

10. Vorrichtung nach Anspruch 9, **dadurch gekennzeichnet, daß** die Steuerung einen Speicher zur Abspeicherung von Einstellungen für die Beleuchtungskörper (10) für jeweilige Umgebungsbedingungen hat.

11. Vorrichtung nach Anspruch 10, **dadurch gekennzeichnet, daß** die Steuerung Reflektionen und Kontraste des erkannten Bildes auswertet und die Steuerung die Beleuchtungskörper (10) zur Minimierung der Reflektionen und zur Erhöhung des Kontrastes justiert.

12. Vorrichtung nach einem der vorhergehenden Ansprüche 6 bis 11, **dadurch gekennzeichnet, daß** die Beleuchtungskörper (10) gepulst und die Erkennungseinrichtung (11) entsprechend getriggert angesteuert werden.

13. Vorrichtung nach einem der vorhergehenden Ansprüche 6 bis 12, **dadurch gekennzeichnet, daß** die Beleuchtungskörper (10) vergossen sind und eine glatte Oberfläche bilden.

14. Vorrichtung nach einem der vorhergehenden Ansprüche 6 bis 13, **dadurch gekennzeichnet, daß** der Tunnel aus einem reflektierenden Material besteht.

15. Vorrichtung nach einem der vorhergehenden Ansprüche 6 bis 14, **dadurch gekennzeichnet, daß** der Tunnel einen ersten Bereich (I) aufweist, in dem die Beleuchtungskörper (10) eine diffuse Strahlung mit einer zur Stirnfläche (5) hin veringerten Intensität liefert, wobei der erste Bereich (I) aus der Frontfläche des Tunnels an der Stirnfläche (5), aus dem mittleren Bereich des Deckels (12), aus dem vorderen und mittleren Teil der Seitenwände (13) und aus dem Boden des Tunnels gebildet ist.

16. Vorrichtung nach Anspruch 15, **dadurch gekennzeichnet, daß** der Tunnel einen zweiten Bereich (II) aufweist, in dem die Beleuchtungskörper (10) eine nach hinten von der Stirnfläche (5) weg gerichtete Strahlung liefert, wobei der zweite Bereich (II) aus dem Vorderteil des Deckels (12) neben der Stirnfläche (5) gebildet ist.

17. Vorrichtung nach einem der Ansprüche 15 oder 16, **dadurch gekennzeichnet, daß** der Tunnel einen dritten Bereich (III) aufweist, in dem die Beleuchtungskörper (10) eine schräg nach vorne zu der Stirnfläche (5) hin gerichtete Strahlung liefert, wobei der dritte Bereich (III) aus dem hinteren Bereich des Deckels (12) gebildet ist.

18. Vorrichtung nach einem der Ansprüche 15 bis 17, **dadurch gekennzeichnet, daß** der Tunnel einen vierten Bereich (IV) aufweist, in dem die Beleuchtungskörper (10) eine gerade auf den Ursprungskörper (2) gerichtete Strahlung liefert, wobei der vierte Bereich (IV) aus dem mittleren Bereich der freiliegenden Seitenwand (13) gebildet ist.

19. Vorrichtung nach einem der Ansprüche 15 bis 18, **dadurch gekennzeichnet, daß** mindestens die Seitenwand (13), an der der Ursprungskörper anliegt, verschieblich ist.

## Claims

1. Method of separating slice-shaped bodies (1) from a source body (2), whereby
- the surrounding area of the end face (5) of the source body (2) is illuminated,
- the respective end face (5) of the source body (2) is detected by a detection device (11) optically with the aid of the contrast between the surrounding area of the end face (5) and the end face (5),
- the slice thickness required for a defined slice weight is determined from the specific mass of the source body (2) and the end face (5),
- separation of the slice-shaped body (1) is controlled using the value thus determined,
**characterized in that**
- the source body (2) is conveyed in a tunnel and
- the source body (2) is illuminated by a plurality of luminaires (10), which are disposed two-dimensionally along the longitudinal direction of the source body (2) in the tunnel.

2. Method according to claim 1, **characterized by** pulsed control of the luminaires (10) and triggered pick-up of the respective end face (5) by the detection device (11).

3. Method according to claim 1 or 2, **characterized in that** the luminaires (10) are individually automatically adjusted, having the steps:
- storage of the setting parameters for the luminaires (10) for specific ambient conditions,
- reading-out of the setting parameters in dependence upon the respective ambient condition,
- adjustment of the luminaires (10) in dependence upon the read-out setting parameters and the respective ambient conditions.

4. Method according to claim 3, **characterized in that** the adjustment of the luminaires (10) is controlled by the detection device (11) in order to eliminate reflections and increase the contrast.

5. Method according to one of the preceding claims, **characterized in that** the end face (5) is additionally illuminated and the detection device (11) analyses superficial structures of the end face (5) and the slice thickness required for a defined slice weight is determined also in dependence upon the superficial structure of the end face (5).

6. Apparatus for separating slice-shaped bodies (1) from a source body (2) having a cutting device (4), a feed device (3) for feeding the source body (2) to the cutting device (4), an optical detection device (9, 11) for determining the end face contour of the source body (2) and having luminaires (10) for illuminating the surrounding area of the end face (5), wherein the detection device (9, 11) determines the end face (5) with the aid of the contrast between the surrounding area of the end face (5) and the end face (5) and the feed of the source body (2) is effected in dependence upon the determined end face (5), **characterized in that** the source body (2) is conveyed in a tunnel, which ends at the cutting side (4), the luminaires (10) are are installed in the tunnel and the luminaires (10) are disposed two-dimensionally along the longitudinal direction of the source body (2).

7. Apparatus according to claim 6, **characterized in that** the luminaires (10) are individually adjustable.

8. Apparatus according to claim 7, **characterized in that** the direction of radiation of the luminaires (10) is individually alignable.

9. Apparatus according to claim 7 or 8, **characterized in that** the luminaires (10) are motor-movable and a control device is provided for adjusting the luminaires (10).

10. Apparatus according to claim 9, **characterized in that** the control device has a memory for storing settings for the luminaires (10) for respective ambient conditions.

11. Apparatus according to claim 10, **characterized in that** the control device analyses reflections and contrasts of the detected image and the control device adjusts the luminaires (10) in order to minimize the reflections and increase the contrast.

12. Apparatus according to one of the preceding claims 6 to 11, **characterized in that** control is such that the luminaires (10) are pulsed and the detection device (11) is correspondingly triggered.

13. Apparatus according to one of the preceding claims 6 to 12, **characterized in that** the luminaires (10) are encapsulated and form a smooth surface.

14. Apparatus according to one of the preceding claims 6 to 13, **characterized in that** the tunnel is made of a reflective material.

15. Apparatus according to one of the preceding claims 6 to 14, **characterized in that** the tunnel comprises a first zone (I), in which the luminaires (10) supplies diffuse radiation of a reduced intensity towards the end face (5), wherein the first zone (I) is formed by the front face of the tunnel adjacent to the end face (5), by the middle region of the roof (12), by the front and middle part of the side walls (13) and by the floor of the tunnel.

16. Apparatus according to claim 15, **characterized in that** the tunnel comprises a second zone (II), in which the luminaires (10) supplies radiation directed rearwards away from the end face (5), wherein the second zone (II) is formed by the front part of the roof (12) next to the end face (5).

17. Apparatus according to one of claims 15 or 16, **characterized in that** the tunnel comprises a third zone (III), in which the luminaires (10) supplies radiation directed obliquely forward towards the end face (5), wherein the third zone (III) is formed by the rear region of the roof (12).

18. Apparatus according to one of claims 15 to 17, **characterized in that** the tunnel comprises a fourth zone (IV), in which the luminaires (10) supplies radiation directed precisely onto the source body (2), wherein the fourth zone (IV) is formed by the middle region of the exposed side wall (13).

19. Apparatus according to one of claims 15 to 18, **characterized in that** at least the side wall (13), against which the source body lies, is displaceable.

## Revendications

1. Procédé pour détacher des corps (1) en forme de tranches d'un corps initial (2), dans lequel :
- on illumine l'environnement de la face frontale (5) du corps initial (2),
- on prend optiquement connaissance de la face frontale respective (5) du corps initial (2) avec un dispositif de reconnaissance (11), à l'aide du contraste entre l'environnement de la face frontale (5) et la face frontale (5),
- on établit à partir de la face frontale (5) et de la masse spécifique du corps initial (2) l'épaisseur de tranche nécessaire pour un poids prédéterminé de la tranche,
- on commande le détachement du corps en forme de tranche (1) avec la valeur ainsi établie,
**caractérisé en ce que**
- on guide le corps initial (2) dans un tunnel, et
- on illumine le corps initial (2) avec de multiples corps d'éclairage (10) qui sont agencés en nappe le long de la direction longitudinale du corps initial (2) dans le tunnel.

2. Procédé selon la revendication 1, **caractérisé par** un pilotage pulsé des corps d'éclairage (10) et une acquisition déclenchée de la face frontale respective (5) par le dispositif de reconnaissance (11).

3. Procédé selon la revendication 1 ou 2, **caractérisé en ce que** les corps d'éclairage (10) sont réglés automatiquement et individuellement, avec les étapes suivantes:
- enregistrement des paramètres de réglage pour les corps d'éclairage (10) pour des conditions d'environnement déterminées,
- lecture des paramètres de réglage en fonction des conditions d'environnement respectives,
- réglage des corps d'éclairage (10) en fonction des paramètres de réglage lus et des conditions d'environnement respectives.

4. Procédé selon la revendication 3, **caractérisé en ce que** l'ajustement des corps d'éclairage (10) est piloté par le dispositif de reconnaissance (11) pour éliminer les réflexions et augmenter le contraste.

5. Procédé selon l'une des revendications précédentes, **caractérisé en ce que** la face frontale (5) est illuminée additionnellement et le dispositif de reconnaissance (11) évalue des structures superficielles de la face frontale (5) et établit l'épaisseur de tranche nécessaire pour un poids prédéterminé de la tranche également en fonction de la structure superficielle de la face frontale (5).

6. Dispositif pour détacher des corps en forme de tranches (1) d'un corps initial (2), comprenant un dispositif séparateur (4), un dispositif d'avance (3) pour faire avancer le corps initial (2) vers le dispositif séparateur (4), un dispositif de reconnaissance optique (9,11) pour déterminer le contour de la face frontale du corps initial (2), et des corps d'éclairage (10) pour illuminer l'environnement de la face frontale (5), le dispositif de reconnaissance (11) déterminant la face frontale (5) à l'aide du contraste entre l'environnement de la face frontale (5) et la face frontale (5), et l'avance du corps initial (2) s'effectuant en fonction de la face frontale établie (5), **caractérisée en ce que** le corps initial (2) est guidé dans un tunnel qui se termine du côté séparation (4), les corps d'éclairage (10) sont installés dans le tunnel et sont disposés en nappe le long de la direction longitudinale du corps initial (2).

7. Dispositif selon la revendication 6, **caractérisé en ce que** les corps d'éclairage (10) sont réglables séparément.

8. Dispositif selon la revendication 7, **caractérisé en ce que** la direction de rayonnement des corps d'éclairage (10) est orientable séparément.

9. Dispositif selon la revendication 7 ou 8, **caractérisé en ce que** les corps d'éclairage (10) sont mobiles par moteurs et **en ce qu'**il est prévu un pilotage pour le réglage des corps d'éclairage (10).

10. Dispositif selon la revendication 9, **caractérisé en ce que** le pilotage possède une mémoire pour enregistrer des réglages pour les corps d'éclairage (10) pour des conditions d'environnement respectives.

11. Dispositif selon la revendication 10, **caractérisé en ce que** le pilotage évalue des réflexions et un contraste de l'image reconnue et le pilotage ajuste les corps d'éclairage (10) pour minimiser les réflexions et accroître le contraste.

12. Dispositif selon l'une des revendications précédentes 6 à 11, **caractérisé en ce que** les corps d'éclairage (10) sont pilotés de façon pulsée et le dispositif de reconnaissance (11) est piloté en étant déclenché de façon correspondante.

13. Dispositif selon l'une des revendications précédentes 6 à 12, **caractérisé en ce que** les corps d'éclairage (10) sont noyés et forment une surface lisse.

14. Dispositif selon l'une des revendications 6 à 13, **caractérisée en ce que** le tunnel est constitué d'un matériau réfléchissant.

15. Dispositif selon l'une des revendications précédentes 6 à 14, **caractérisé en ce que** le tunnel présente une première zone (I) dans laquelle les corps d'éclairage (10) délivrent un rayonnement diffus avec une intensité réduite vers la face frontale (5), la première zone (I) étant constituée de la face avant du tunnel adjacente à la face frontale (5), de la zone centrale du couvercle (12), de la partie avant et centrale des parois latérales (13) et du plancher du tunnel.

16. Dispositif selon la revendication 15, **caractérisé en ce que** le tunnel présente une deuxième zone (II) dans laquelle les corps d'éclairage (10) délivrent un rayonnement dirigé vers l'arrière en s'éloignant de la face frontale (5), la deuxième zone (II) étant constituée de la partie avant du couvercle (12) à côté de la face frontale(5).

17. Dispositif selon la revendication 15 ou 16, **caractérisé en ce que** le tunnel présente une troisième zone (III) dans laquelle les corps d'éclairage (10) délivrent un rayonnement dirigé obliquement vers l'avant vers la face frontale (5), la troisième zone (III) étant constituée par la zone arrière du couvercle (12).

18. Dispositif selon l'une des revendications 15 à 17, **caractérisé en ce que** le tunnel comprend une quatrième zone (IV) dans laquelle les corps d'éclairage (10) délivrent un rayonnement dirigé droit sur le corps initial (2), la quatrième zone (IV) étant constituée de la zone centrale de la paroi latérale libre (13).

19. Dispositif selon l'une des revendications 15 à 18, **caractérisé en ce qu'**au moins la paroi latérale (13) contre laquelle s'appuie le corps initial est déplaçable.
